# EUROPEAN PATENT SPECIFICATION

(11) **EP 2 627 735 B1**
(45) Date of publication and mention of the grant of the patent: **26.11.2014**
(21) Application number: 11776618.8
(22) Date of filing: 04.10.2011
(51) Int. Cl.: C10G 2/00, C10G 11/18, B01J 29/08, B01J 29/70

(54) **A PROCESS FOR CATALYTIC CRACKING A FISCHER-TROPSCH DERIVED FEEDSTOCK WITH HEAT BALANCED OPERATION OF THE CATALYTIC CRACKING SYSTEM**
KATALYTISCHES CRACKVERFAHREN FÜR EINEN FISCHER-TROPSCH-ROHSTOFF MIT WÄRMEAUSGEGLICHENEM BETRIEB DES KATALYTISCHEN CRACKSYSTEMS
PROCÉDÉ DE CRAQUAGE CATALYTIQUE D'UNE CHARGE D'ALIMENTATION ISSUE DE LA SYNTHÈSE FISCHER-TROPSCH À L'AIDE D'UN FONCTIONNEMENT EN ÉQUILIBRE THERMIQUE DU SYSTÈME DE CRAQUAGE CATALYTIQUE

(30) Priority: 11.10.2010 US 391826 P
(43) Date of publication of application: 21.08.2013
(73) Proprietor: Shell Oil Company, Houston, TX 77252-2463 (US); Shell Internationale Research Maatschappij B.V., 2596 HR The Hague (NL)
(72) Inventor: HADJIGEORGE, George A., Sugar Land Texas 77479 (US); RANGANATHAN, Easwar Santhosh, Houston Texas 77077 (US)
(74) Representative: Matthezing, Robert Maarten
(86) International application number: PCT/US2011/054685
(87) International publication number: WO 2012/051004

(56) References cited:
- US-A- 4 072 600
- US-A- 4 684 756
- US-A1- 2001 025 806
- US-A1- 2005 209 093

## Description

The invention relates to a catalytic cracking process for cracking a Fischer-Tropsch derived feedstock using a catalytic cracking system that is operated in heat balance.

The fluidized catalytic cracking (FCC) of heavy hydrocarbons to produce lower boiling hydrocarbon products such as gasoline have been around since the 1940's. Typically, a catalytic cracking system (an FCC unit) includes a riser reactor, a catalyst separator and stripper, and a regenerator. An FCC feedstock is introduced into the riser reactor wherein it is contacted with hot FCC catalyst from the regenerator. The mixture of the feedstock and FCC catalyst passes through the riser reactor and into the catalyst separator wherein the resulting cracked product is separated from the FCC catalyst. The separated cracked product passes from the catalyst separator to a downstream separation system and the separated catalyst passes to the regenerator where the coke deposited on the FCC catalyst during the cracking reaction is burned off the catalyst to provide a regenerated catalyst. The resulting regenerated catalyst is used as the aforementioned hot FCC catalyst and is mixed with the FCC feedstock that is introduced into the riser reactor.

The operation of an FCC unit requires that it to be in heat balance. To have a heat balanced operation requires that enough coke is deposited upon the FCC catalyst during the endothermic cracking reaction, which occurs mostly in the riser reactor, so that when the coke is burned off the catalyst within the regenerator enough of the heat of combustion is absorbed by the catalyst so as to provide the heat requirements of the catalytic cracking system. In general, for a heat balanced FCC unit operation, the amount of coke burned in the regenerator approximates the amount of coke formed in the riser reactor that is deposited on the FCC catalyst. The major heat requirements in the operation of an FCC unit include heating and vaporizing of the feed that is introduced into the riser reactor, the endothermic heat of reaction to crack the feed, heat losses of the FCC unit, and heating of air and steam.

The cracking of Fischer-Tropsch feedstocks in FCC units can be problematic in that these feeds are highly paraffinic and contain practically no aromatics giving such feedstocks properties that allow them to be easily cracked with a relatively low yield of coke. The amount of coke yielded in the cracking of Fischer-Tropsch feedstocks is typically insufficient to provide for the heat balance in the operation of the FCC unit that is processing the feedstock.

The problem of insufficient coke yield associated with the cracking of Fischer-Tropsch feedstocks to provide for a heat balanced process operation is recognized in the art. For instance, U.S. Patent No. 4,684,756 discloses a process for converting a Fischer-Tropsch synthesis wax in a fluidized catalytic cracking unit. It notes that the Fischer-Tropsch synthesis wax is so reactive that an optimum design of an FCC unit requires a very short reactor length to give a low reaction residence time. The catalyst used in such an operation is required to have a low activity. The '756 patent indicates that the coke deposited on the cracking catalyst in the cracking of Fischer-Tropsch synthesis wax is insufficient to provide heat balance of the FCC operation. The patent also notes that additional heat is necessary in the regeneration step to provide a heat balanced FCC operation. It is suggested that heat balance may be achieved by the use of such potential fuel sources as clean synthesis gas and tail gases. There is no indication that an FCC unit may be used to process only a Fischer-Tropsch feedstock without the introduction of feedstock types other than a Fischer-Tropsch derived feedstock and without the introduction of another heat source such as the burning of a fuel source such as torch oil inside the regenerator.

U.S. Patent No. 6,558,531 discloses a process for maintaining heat balance in a coke-limited FCC unit by independently conducting fuel and oxygen to a transfer line at one or more points between the reactor and regenerator. The process of the '531 patent substitutes for other methods of providing additional heat in an FCC unit that is not heat balanced, such as, the use of torch oil firing to restore heat balance. The disclosed process includes conducting a fuel and an oxygen-containing gas independently for introduction at one or more locations along a transfer line in order to provide for distributed burning of the fuel in the transfer line to thereby heat and at least partially regenerate the catalyst. A coke or heat limited FCC unit may be restored to heat balance by this distributed burning of the fuel in the transfer line. There is no indication that an FCC unit may be used to process only a Fischer-Tropsch feedstock without the introduction of feedstock types other than a Fischer-Tropsch derived feedstock to provide additional heat to an FCC unit that is coke-limited or not in heat balance.

Another FCC process for cracking Fischer-Tropsch derived hydrocarbons that addresses some of the problems associated with insufficient coke yield to heat balance the process is disclosed in U.S. Patent Publication 2010/0076096. The process disclosed in this publication provides for the heat balance of a fluidized catalytic cracking process that processes a Fischer-Tropsch hydrocarbon by using a line-up of two reactors and a single regenerator. Two feedstocks are processed with a conventional hydrocarbon feedstock undergoing cracking in a first reaction zone and a predominantly Fischer-Tropsch hydrocarbon feedstock undergoing cracking in a second reaction zone. Regenerated catalyst is used in the second reaction zone and used regenerated catalyst from the second reaction zone is used at least in part in the first reaction zone of the process. An advantage of the overall FCC process is that it is heat balanced despite the use of a Fischer-Tropsch derived feedstock. Sufficient coke is deposited on the catalyst in the first reaction zone to balance for the lesser coke produced in the second reaction zone. There is no indication that a conventional FCC unit may be used to process only a Fischer-Tropsch derived feedstock without the introduction of feedstock types other than the Fischer-Tropsch derived feedstock for the purpose of providing additional heat to an FCC unit that is coke-limited or not in heat balance.

It would be desirable to have an FCC process that is capable of processing or cracking a Fischer-Tropsch derived waxy feedstock while also being in heat balance without the need to provide for an additional heat source.

Accordingly, provided is a catalytic cracking process, which comprises: providing a catalytic cracking system, wherein said catalytic cracking system comprises a riser reactor, a separator and a regenerator each thereof being operatively interconnected; introducing a cracking catalyst, wherein said cracking catalyst comprises a large pore zeolite having a rare earth component present in said large pore zeolite in an amount in the range of from 0.25 to 5 weight percent (wt. %), based on the weight of said large pore zeolite, into a riser reactor zone defined by said riser reactor; introducing a hydrocarbon feedstock, wherein said hydrocarbon feedstock comprises a Fischer-Tropsch derived waxy feedstock, into said riser reactor zone operated under suitable catalytic cracking conditions at a gas residence time in the range of from 1 second to 10 seconds, a riser reactor temperature greater than 500 °C and a catalyst-to-oil ratio greater than 8, wherein said cracking catalyst is contacted and mixed with said hydrocarbon feedstock; passing from said riser reactor zone a riser reactor product mixture, wherein said riser reactor product mixture comprises a cracked hydrocarbon product and a spent cracking catalyst having coke deposited thereon in an amount or at a concentration sufficient to provide for the heat balance in the operation of said catalytic cracking system of said catalytic cracking process by combustion of said coke within said regenerator which amount or concentration is at least 4 wt.% of the total weight of the catalyst and carbon; introducing said riser reactor product mixture into a separation zone defined by said separator providing for the separation of said riser reactor product mixture into a separated cracked hydrocarbon product and a separated spent cracking catalyst; passing said separated spent cracking catalyst to a regeneration zone defined by said regenerator wherein said coke on said separated spent cracking catalyst is combusted so as to release heat energy and to provide a regenerated cracking catalyst; and utilizing said regenerated cracking catalyst as said cracking catalyst.

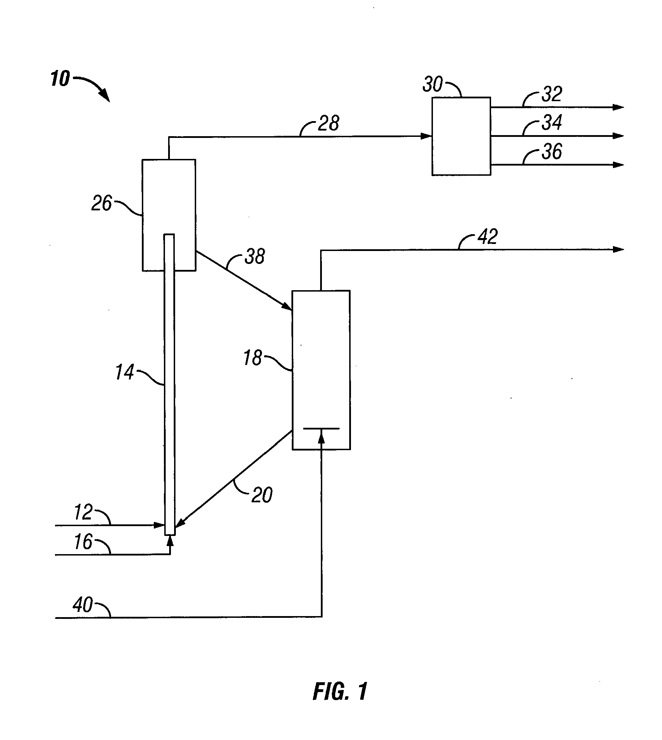

FIG. 1 is a process flow schematic representing certain aspects of the inventive catalytic cracking process that processes a hydrocarbon feedstock comprising a Fischer-Tropsch derived waxy feedstock and in which there is sufficient coke yield to provide for the heat balance in the operation of the catalytic cracking system.

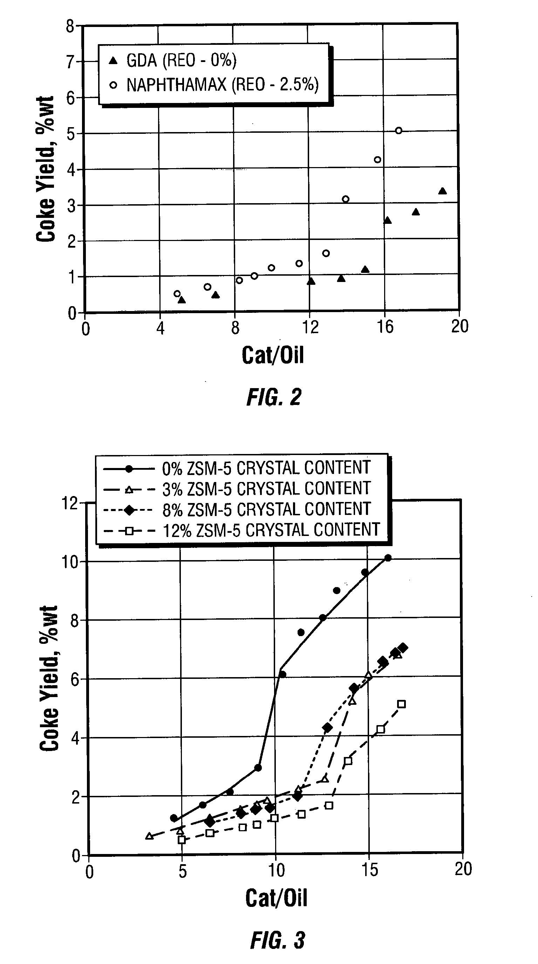

FIG. 2 presents comparison plots showing the coke yield versus catalyst-to-oil ratio in the catalytic cracking of a Fischer-Tropsch derived waxy feedstock using high rare earth oxide FCC catalyst of various rare earth oxide concentrations. The plots illustrate the impact that different rare earth oxide concentrations in the cracking catalyst have on coke yield and catalyst-to-oil ratio.

FIG. 3 presents comparison plots showing the coke yield versus catalyst-to-oil ratio in the catalytic cracking of a Fischer-Tropsch derived waxy feedstock using a rare earth oxide FCC catalyst and various levels of ZSM-5 additive. The plots illustrate the impact that different amounts of ZSM-5 additive used in the cracking process have on coke yield and catalyst-to-oil ratio.

The invention provides for the catalytic cracking of a Fischer-Tropsch derived waxy feedstock in a conventional catalytic cracking system while maintaining heat balance in its operation. The catalytic cracking of Fischer-Tropsch derived waxy feedstocks in a catalytic cracking system without the processing of any other type of feedstock will typically not yield enough coke to provide heat to balance the needs of the process system. The inventive process, however, provides for the catalytic cracking of Fischer-Tropsch derived waxy feedstocks in conventional catalytic cracking systems that are heat balanced without the use of additional feedstocks to the riser reactor of the system other than the Fischer-Tropsch derived waxy feedstock or without the introduction of additional fuels into the regenerator of the catalytic cracking system for the purpose of providing additional heat beyond that which is provided by the coke on the catalyst.

The catalytic cracking system of the invention comprises a riser reactor, a separator, and a regenerator each of which are operatively interconnected. A hydrocarbon feedstock comprising a Fischer-Tropsch derived waxy feedstock is introduced into the riser reactor wherein it is contacted and mixed with hot regenerated cracking catalyst from the regenerator. The resulting riser reactor product mixture of cracked hydrocarbon product and spent cracking catalyst passes through the riser reactor and into the separator wherein it separated into a separated cracked hydrocarbon product and a separated spent cracking catalyst. The separated spent cracking catalyst is passed to the regenerator wherein the coke that is deposited on the separated spent cracking catalyst is combusted so as to release heat energy and to provide a regenerated cracking catalyst. The regenerated cracking catalyst is used as the hot regenerated cracking catalyst that is introduced into the riser reactor.

The cracking catalyst composition that is to be used in the catalytic cracking process is a highly important feature of the inventive process. In particular, it is an important aspect of the inventive process to use a cracking catalyst that comprises a large pore zeolite having a rare earth component. Regarding the rare earth component, it is especially important for the amount of the rare earth component that is present in the cracking catalyst to be within a specific concentration range so as to provide for the coke yield required for heat balance in the operation of the catalytic cracking system.

The zeolites that may suitably be used in the cracking catalyst are large pore zeolites including those aluminosilicates selected from the group consisting of zeolite X, zeolite Y, ultra stable zeolite Y, zeolite beta, zeolite L, offretite, mordenite, faujasite and zeolite omega. Among these, the preferred large pore zeolite for use in the cracking catalyst is selected from zeolite X, zeolite Y, ultra stable zeolite Y, and zeolite beta.

The large pore zeolite of the cracking catalyst is to contain a rare earth component that is, preferably, incorporated into the crystal lattice of the zeolite, preferably by any suitable method of ion exchange. One ion exchange methodology for use in the incorporation of the rare earth component into the zeolite is the replacement of the original cations associated with the zeolite with rare earth cations by contacting the zeolite with a salt solution of the desired replacement cation or cations. Although a wide variety of salts can be employed, particular preference is given to the chlorides, nitrates and sulfates of the rare earth element.

The rare earth elements include those of the Lanthanide series of the periodic table of elements having atomic numbers 57 through 71, i.e., La, Ce, Pr, Nd, Pm, Sm, Eu, Gd, Tb, Dy, Ho, Er, Tm, Yb, and Lu. Among these elements, the preferred ones for selection as the rare earth component of the cracking catalyst for use in the inventive process are lanthanum (La) and cerium (Ce).

The rare earth oxide, RE₂O₃, (e.g., La₂O₃ and Ce₂O₃) content of the large pore zeolite should be in the range of from or about 0.25 wt. % to or about 5 wt. % with the weight percent being based on the total weight of the zeolite with the rare earth as an oxide. It is preferred for the rare earth component of the large pore zeolite to be present in an amount in the range of from 0.4 wt. % to 4 wt. %, and, more preferred, the rare earth component is present in the large pore zeolite in an amount in the range of from 0.5 wt. % to 3 wt. %.

The cracking catalyst can further comprise, in combination with the large pore zeolite, a porous inorganic refractory oxide matrix or binder component providing a matrix surface area. Examples of possible porous matrix or binder material may include alumina, silica, titania, zirconia, magnesia, berylia, thoria and any combination of two or more thereof, such as, for example, silica-alumina, silica-magnesia, silica-zirconia, silica-thoria, silica-berylia, silica-titania, and ternary compositions, such as, silica-alumina-thoria, silica-alumina-zirconia, silica-alumina-magnesia, silica-magnesia-zirconia and the like. The binder or matrix material may be in the form of a cogel. The preferred porous inorganic refractory oxide matrix or binder component is selected from alumina, silica, or a combination thereof, and, most preferred, it is alumina.

The proportion of the large pore zeolite component of the cracking catalyst may be in the range of from 10 to 99 wt. % of the dry weight of the cracking catalyst. Usually, however, the large pore zeolite component of the cracking catalyst is in the range of from 25 to 80 wt. %, and, even, in the range of from 35 to 60 wt.%. The porous inorganic oxide component of the cracking catalyst may be present in an amount in the range of from 1 to 90 wt. %, or from 20 to 75 wt.%, or from 40 to 65 wt.%.

The hydrocarbon feedstock that is charged or introduced into the riser reactor zone, which is defined by the riser reactor of the catalytic cracking system of the process, comprises a Fischer-Tropsch derived waxy feedstock. What is meant herein by the use of the phrase "Fischer-Tropsch derived waxy feedstock" is reference to a product that is highly paraffinic and which has very low concentrations of aromatic and non-alkane compounds and further is derived from the synthesis product of a Fischer-Tropsch reaction or process in that either it is the Fischer-Tropsch synthesis product itself or it is a cut from or portion of the Fischer-Tropsch synthesis product.

The Fischer-Tropsch reaction converts carbon monoxide (CO) and hydrogen (H₂) into longer chain hydrocarbons, which conversion product comprises predominantly alkanes of which most are straight chain alkanes, but there may be a minor portion thereof that are branched alkanes, with only a small portion of the conversion product including non-alkane formed products, such as alkene or alcohol or aromatic compounds.

The small portion of non-alkane formed products is generally less than 5 wt.% of the Fischer-Tropsch reaction product, more typically, less than 3 wt.% of the Fischer-Tropsch reaction product, and, most typically, less than 1 wt.% of the Fischer-Tropsch reaction product.

In regards to the aromatics content of the Fischer-Tropsch reaction product, it is typically less than 2 wt.%, more typically, less than 1 wt. %, and most typically, less than 0.5 wt% of the Fischer-Tropsch reaction product.

The Fischer-Tropsch reaction product will comprise hydrocarbon compounds having from 1 to 100 carbon atoms per molecule, and, even compounds having more than 100 carbon atoms per molecule. It is preferred for the Fischer-Tropsch reaction product to not contain large amounts of hydrocarbon compounds having four or fewer carbon atoms per molecule.

The Fischer-Tropsch reaction product is synthesized by contacting, under suitable reaction conditions, a suitable catalyst with a gaseous mixture comprising hydrogen and carbon monoxide to yield the Fischer-Tropsch reaction product. The Fischer-Tropsch reaction may be represented as follows: (2n + 1)H₂ + nCO → CₙH₍₂ₙ₊₂₎ + nH₂O, where n is a positive integer.

The Fischer-Tropsch reaction is carried out at a temperature in the range of from 125 °C to 350 °C, preferably of from 150 °C to 275 °C, and more preferably of from 200 °C to 260 °C. The reaction pressure is typically in the range of from 5 to 150 bar (absolute), and preferably, of from 5 to 80 bar (absolute).

The relative amounts of carbon monoxide and hydrogen in the gaseous mixture used in the Fischer-Tropsch reaction may vary over a wide range and may be selected according to the particular catalyst and process operating conditions being employed, but, generally, the molar ratio of hydrogen-to-carbon monoxide in the gaseous mixture will be in the range of from 0.4 to 3.

The catalyst used for the Fischer-Tropsch synthesis reaction may comprise a catalytically active metal component selected from the Group VIII metals of the periodic table of which the preferred metal component is either cobalt (Co), iron (Fe), ruthenium (Ru) or nickel (Ni) that is supported on a high surface area binder or support material, such as, silica, alumina or zeolite. The catalyst may further comprise a promoter component such as potassium (K) or copper (Cu).

The Fischer-Tropsch derived waxy feedstock that is introduced into the riser reactor preferably predominantly comprises heavy paraffin waxes that are hydrocarbons having five or more carbon atoms per molecule ("C₅₊ hydrocarbons"). Thus, the Fischer-Tropsch derived waxy feedstock that is introduced into the riser reactor desirably comprises a major portion thereof C₅₊ hydrocarbons.

It is desirable for the Fischer-Tropsch derived waxy feedstock to, thus, comprise at least 60 wt.% C₅₊ hydrocarbons, but, it is preferred for the Fischer-Tropsch derived waxy feedstock to comprise at least 70 wt.% C₅₊ hydrocarbons, and it is even more preferred for the Fischer-Tropsch derived waxy feedstock to comprise at least 80 wt. % C₅₊ hydrocarbons, and, most preferred, at least 85 wt.% C₅₊ hydrocarbons.

Also, it is particularly desirable for the Fischer-Tropsch derived waxy feedstock to have distillation characteristics, as measured according to ASTM D7169-05, such that its distillation temperature when 10% is vaporized (T10) is in the range of from 200 °C (392 °F) to 450 °C (842 °F), and its distillation temperature when 90% is vaporized (T90) is in the range of from 400 °C (752 °F) to 625 °C (1157 °F). It is preferred for the T10 to be in the range of from 250 °C (482 °F) to 425 °C (797 °F), and the T90 to be in the range of from 450 °C (842 °F) to 600 °C (1112 °F), and, most preferred, the T10 should be in the range of from 275°C (527 °F) to 405 °C (761 °F), and the T90 should be in the range of from 475 °C (887 °F) to 575 °C (1067 °F).

In the inventive process, cracking catalyst, which includes at least a portion thereof that is regenerated cracking catalyst, is introduced into the riser reactor zone defined by the riser reactor along with the introduction of a hydrocarbon feedstock that comprises a Fischer-Tropsch derived waxy feedstock. The riser reactor zone is maintained or operated under suitable catalytic cracking conditions and within the riser reactor zone the cracking catalyst is contacted and mixed with the hydrocarbon feedstock.

In an embodiment of the inventive process, the hydrocarbon feedstock comprises predominantly a Fischer-Tropsch derived waxy feedstock with no significant quantity of hydrocarbon source or type other than the Fischer-Tropsch derived waxy feedstock. Thus, in one embodiment of the invention, the hydrocarbon feedstock introduced into the riser reactor zone comprises a material absence of a hydrocarbon source or type other than the Fischer-Tropsch derived waxy feedstock. The hydrocarbon feedstock, therefore, can comprise less than 10 vol. % of a non-Fischer-Tropsch derived waxy feedstock (i.e., a hydrocarbon source or type other than the Fischer-Tropsch derived waxy feedstock), or less than 5 vol.% of a non-Fischer-Tropsch derived waxy feedstock, and, even, less than 1 vol.% of a non-Fischer-Tropsch derived waxy feedstock.

In a further embodiment of the inventive process, there is no significant or material quantities of hydrocarbons that are introduced into the riser reactor zone other than the hydrocarbon feedstock. Thus, in this embodiment, the process of the invention comprises introducing into the riser reactor zone of the riser reactor of the catalytic cracking system no significant or material amount of a hydrocarbon source other than the Fischer-Tropsch derived waxy feedstock or the hydrocarbon feedstock.

The mixture of hydrocarbon feedstock and cracking catalyst passes through the riser reactor zone wherein cracking takes place. The riser reactor defines a catalytic cracking zone, or riser reactor zone, and provides means for providing contacting time to allow the cracking reactions to occur.

The catalytic cracking conditions under which the riser reactor zone is maintained or operated are important, if not critical, features of the inventive process. Due to the processing of the Fischer-Tropsch derived waxy feedstock and the resulting relatively low yield of coke, in order to provide a catalytic cracking process that is operated in heat balance, it is a significant and important aspect of the inventive process to control the catalytic cracking conditions within the riser reactor zone to within specifically defined ranges as well as to utilize in combination with these process conditions the specifically defined rare earth containing large pore zeolite cracking catalyst. These process conditions include the gas residence time, the catalyst-to-oil ratio and riser reactor outlet temperature.

The gas residence time has a well understood meaning to those skilled in the art of fluidized catalytic cracking, and it may be generally defined as the average amount of time that a particle of the hydrocarbon feedstock spends in the riser reactor zone. The gas residence time may also be defined mathematically as the volume of the riser reactor zone divided by the volumetric gaseous rate of flow of the hydrocarbon feedstock at the outlet of the riser reactor zone.

It is an important aspect of the invention for the gas residence time to be relatively long but within the range of from 1 to 10 seconds. In general, the gas residence time is greater than 2 seconds, preferably, greater than 2.5 seconds, more preferably, greater than 3 seconds, and, most preferably greater than 3.5 seconds. The upper end of the range for the gas residence time is less than 10 seconds.

The catalyst-to-oil ratio is another of the catalytic cracking conditions that is important to the operation of the catalytic cracking process in heat balance mode when processing the Fischer-Tropsch derived waxy feedstock. The catalyst-to-oil ratio is the weight ratio of cracking catalyst to hydrocarbon feedstock that is introduced into the riser reactor zone. It is a feature of the inventive process for the catalyst-to-oil ratio to be greater than 8. It is more desirable, however, to control the catalyst-to-oil ratio to be greater than 9, but, preferably, the catalyst-to-oil ratio is greater than 10. A practical upper limit for the catalyst-to-oil ratio is 50. But, a more typical upper limit for the catalyst-to-oil ratio of the inventive process is about 20 or 30.

The riser reactor temperature, measured at its outlet, is also an important reactor zone condition of the operation of the catalytic cracking process in heat balance mode when processing the Fischer-Tropsch derived waxy feedstock. The riser reactor temperature is controlled so that it exceeds 500 °C (932 °F), but, preferably so that it exceeds 510 °C (950 °F), and, more preferably, so that it exceeds 525 °C (977 °F). An upper limit for the riser reactor temperature is less than 600 °C (1112 °F) or less than 650 °C (1202 °F).

The riser reactor product mixture, which comprises a cracked hydrocarbon product and a spent cracking catalyst, and which results from the cracking of the hydrocarbon feedstock within the riser reactor zone, passes from the riser reactor zone and is introduced into the separation zone that is defined by the separator. The separator provide means for separating the riser reactor product mixture into a separated cracked hydrocarbon product and a separated spent cracking catalyst.

The separator can be any system or means known to those skilled in the art for separating spent cracking catalyst from a cracked hydrocarbon product. In a typical separator operation, the riser reactor product mixture passes to the separator system that includes cyclones for separating the spent cracking catalyst from the vaporous cracked hydrocarbon product. The separated spent cracking catalyst enters the separator vessel from the cyclones where it is contacted with steam to further remove cracked hydrocarbon product from the spent cracking catalyst.

The amount of coke that is deposited upon the spent cracking catalyst of the invention is a particularly significant, if not critical, aspect of the inventive process; since, the catalytic cracking system is processing almost entirely, if not entirely or exclusively, a Fischer-Tropsch derived waxy feedstock. It is the processing of this feedstock, without the introduction of other sources or types of hydrocarbon feeds and without the introduction of other heat sources into the regenerator, such as, torch oils or other hydrocarbon fuels, besides the coke that is contained on the spent cracking catalyst, that makes the amount or concentration of coke on the spent catalyst even more significantly important than it ordinarily is with conventional catalytic cracking operations. It is the combination of catalyst selection, operating conditions and potentially other features that enable the operation of the catalytic cracking system, with its processing of essentially exclusively a Fischer-Tropsch derived waxy feedstock, in heat balance mode without the addition of an external source of heat.

It is, thus, unexpected that the spent cracking catalyst has an amount of coke deposited thereon, or otherwise a deposited coke concentration, that is sufficient to provide for the heat balanced operation of the catalytic cracking system of the catalytic cracking process by its combustion within the regenerator. The concentration of coke on the spent cracking catalyst or on the separated spent cracking catalyst is at least 4 wt. % of the total weight of the catalyst and the carbon. Preferably, the concentration of coke on the spent cracking catalyst or separated spent cracking catalyst is at least 5 wt. %.

In certain embodiments of the inventive process a shape selective zeolite additive (additive) may be used in combination with the cracking catalyst. The additive may be added to the catalytic cracking system by introducing it into the riser reactor zone of the riser reactor or into the regenerator zone of the regenerator or elsewhere within the catalytic cracking system. The amount of additive utilized is an amount relative to the inventory of the cracking catalyst contained within the catalytic cracking system such that the weight percent (wt.%) of shape selective zeolite additive, excluding any binder material other than the zeolite crystals, (i.e., the zeolite crystals of the additive), based upon the total the catalytic cracking system. weight of cracking catalyst inventory in the catalytic cracking system, is less than 5 wt.% zeolite crystals.

It can be a feature of the catalytic cracking process to maintain the additive content in the cracking catalyst inventory of the catalytic cracking system to be low enough so that it does not materially inhibit the coke yield when operating the catalytic cracking process with the Fischer-Tropsch derived waxy feedstock. This is done by maintaining the additive content in the cracking catalyst inventory at a level that is or is less than a minor amount of the cracking catalyst inventory.

It is believed that increasing of the additive inventory in the catalytic cracking system results in a reduction in coke yield which may have a negative impact on heat balance of the catalytic cracking system when processing Fischer-Tropsch derived waxy feedstocks. The less than a minor amount of additive should, generally, be less than 3 wt.% of the cracking catalyst inventory. It is preferred for the amount of additive in the cracking catalyst inventory to be less than 1.5 wt.%, and, more preferred, it is less than 0.5 wt.%. The lower end of the range of additive used in the cracking catalyst inventory is as low as none (0 wt.%) to greater than 0.1 wt.% or even greater than 0.2 wt.%.

It is recognized that the additive may be used to affect the composition of the cracked hydrocarbon product and the mix of end product streams yielded from the catalytic cracking system, and, in certain embodiments of the invention, it can be desirable to use significant amounts of shape selective zeolite additive in order to modify the composition of the cracked hydrocarbon product by using additive amounts exceeding 5 wt.% zeolite crystals, based on the total weight of the cracking catalyst inventory.

It has been discovered that, with a specific combination of process conditions, a Fischer-Tropsch derived waxy feedstock may exclusively be charged to the riser reactor zone of a catalytic cracking system that contains a cracking catalyst inventory having a high percentage content of shape selective zeolite additive while still operating such catalytic cracking system so that enough coke is yielded to provide a heat balanced operation. Prior to this discovery, it was thought that the exclusive processing of a Fischer-Tropsch derived waxy feedstock would provide for a very low yield of coke when processing a Fischer-Tropsch derived waxy feedstock in a catalytic cracking system having a large percentage of its cracking catalyst inventory as a zeolite additive regardless of the riser reactor temperature, residence time and catalyst-to-oil ratio used in the operation.

It has been discovered, however, that for a combination of specifically defined process conditions, the incremental coke yield response to incremental increases in catalyst-to-oil ratio is larger than expected as compared to such response when utilizing alternative process conditions. This greater response in coke yield can provide for a large enough yield in coke when processing a Fischer-Tropsch derived waxy feedstock, exclusively without the use of other or additional heat sources, to heat balance the catalytic cracking system and process.

In this embodiment of the inventive process, for the case of operating under specific process conditions as described above, the dilution additive used may be, as noted, an amount exceeding 5 wt.% zeolite crystals, based on the total weight of the cracking catalyst inventory. It is preferred for the amount of dilution additive used in this embodiment to be in the range of from 5 wt.% to 15 wt.%, more preferred, from 6 wt.% to 14 wt.%, and, most preferred, from 7 wt.% to 13 wt.%.

A typical shape selective zeolite additive is an additive that includes a shape selective zeolite having a Constraint Index of from 1 to 12. Details of the Constraint Index test are provided in J. Catalysis, 67, 218-222 (1981) and in U. S. Pat. No. 4,711,710. Shape selective zeolites include those selected from the family of medium pore size crystalline aluminosilicates or zeolites. The medium pore size zeolites generally have a pore size from about 0.5 nm, to about 0.7 nm and include, for example, MFI, MFS, MEL, MTW, EUO, MTT, HEU, FER, and TON structure type zeolites (IUPAC Commission of Zeolite Nomenclature). Non-limiting examples of such medium pore size zeolites, include ZSM-5, ZSM-12, ZSM-22, ZSM-23, ZSM-34, ZSM-35, ZSM-38, ZSM-48, ZSM-50, silicalite, and silicalite 2. Medium pore zeolites are described in the "Atlas of Zeolite Structure Types," Eds. W. H. Meier and D. H. Olson, Butterworth-Heineman, Third Edition, 1992.

ZSM-11 is described in U.S. Patent No. 3,709,979; ZSM-12 in U.S. Patent No. 3,832,449; ZSM-21 and ZSM-38 in U.S. Patent No. 3,948,758; ZSM-23 in U.S. Patent No. 4,076,842; and ZSM-35 in U.S. Patent No. 4,016,245. Other molecular sieves include the silicoaluminophosphates (SAPO), such as SAPO-4 and SAPO-11 which is described in U.S. Patent No. 4,440,871; chromosilicates; gallium silicates, iron silicates; aluminum phosphates (ALPO), such as ALPO-11 described in U.S. Patent No. 4,310,440; titanium aluminosilicates (TASO), such as TASO-45 described in EP-A No. 229,295; boron silicates, described in U.S. Patent No. 4,254,297; titanium aluminophosphates (TAPO), such as TAPO-11 described in U.S. Patent No. 4,500,651; and iron aluminosilicates.

The most significant shape selective zeolite additive is ZSM-5, which is described in U. S. Patent Nos. 3,702,886; 3,770,614; and 4,368,114. The ZSM-5 used as the shape selective zeolite additive may be held together with a catalytically inactive inorganic oxide matrix component in accordance with conventional methods.

The separated spent cracking catalyst is then passed to a catalyst regenerator that provides means for regenerating the separated spent cracking catalyst and defines a regeneration zone into which the separated spent cracking catalyst is introduced and wherein carbon that is deposited on the separated spent cracking catalyst is burned in order to remove the carbon to provide a regenerated cracking catalyst having a reduced carbon content and to release heat energy.

The catalyst regenerator typically is a vertical cylindrical vessel that defines the regeneration zone and wherein the spent cracking catalyst is maintained as a fluidized bed by the upward passage of an oxygen-containing regeneration gas, such as air.

The temperature within the regeneration zone is, in general, maintained in the range of from about 621 °C (1150 °F) to 788 °C (1450 °F), and more, typically, in the range of from 677 °C (1250 °F) to 715 °C (1320 °F).

The pressure within the regeneration zone typically is in the range of from about atmospheric to about 345 kPa (50 psig), and, preferably, from about 34 to 345 kPa (5 to 50 psig).

The residence time of the separated spent cracking catalyst within the regeneration zone is in the range of from about 1 to about 6 minutes, and, typically, from or about 2 to or about 4 minutes.

The coke content on the regenerated cracking catalyst is less than the coke content on the separated spent cracking catalyst and, generally, is less than 0.5 wt. %, with the weight percent being based on the weight of the regenerated cracking catalyst excluding the weight of the coke content. The coke content of the regenerated cracking catalyst will, thus, generally, be in the range of from or about 0.01 wt. % to or about 0.5 wt. %. It is preferred for the coke concentration on the regenerated cracking catalyst to be less than 0.3 wt. % and, it will thus preferably be in the range of from 0.01 wt. % to 0.3 wt. %. Most preferably, the coke concentration on the regenerated cracking catalyst is less than 0.1 wt. % and, thus, in the range of from 0.01wt.% To 0.1 wt.%.

The regenerated catalyst settles within the catalyst regenerator from which inventory is withdrawn. The regenerated catalyst for utilized as the cracking catalyst that is introduced into the riser reactor zone of the inventive process. Fresh or unused cracking catalyst may be added to the inventory of regenerated catalyst contained within the catalyst regenerator to also be used as the cracking catalyst of the inventive process.

FIG.1 presents a process flow schematic representative of a catalytic cracking process system 10 that utilizes a rare earth oxide, large pore zeolite based cracking catalyst in the catalytic cracking of a Fischer-Tropsch derived waxy feedstock.

In the catalytic cracking process system 10, a hydrocarbon feedstock that comprises a Fischer-Tropsch derived waxy feedstock passes through conduit 12 and is introduced into the bottom of riser reactor 14.

Riser reactor 14 defines a riser reactor zone, or a cracking zone, wherein the hydrocarbon feedstock is mixed and contacted with the cracking catalyst. The riser reactor zone defined by the riser reactor 14 is operated under such suitable catalytic cracking conditions as to provide a riser reactor product mixture comprising a cracked hydrocarbon product and a spent cracking catalyst having coke deposited thereon in an amount or at a concentration sufficient thereon so as to provide for the heat balance in the operation of the catalytic cracking process system 10. Steam may be introduced into the bottom of the riser reactor 14 by way of conduit 16.

In the preferred embodiment of the invention, the rare earth oxide, large pore zeolite based cracking catalyst that is introduced into the riser reactor 14 is a regenerated cracking catalyst taken from catalyst regenerator 18 and which passes through conduit 20 to be introduced into the bottom of riser reactor 14 for contacting with the hydrocarbon feedstock that is introduced by way of conduit 12.

The mixture of hydrocarbon feedstock and cracking catalyst passes through riser reactor 14, wherein the hydrocarbon feedstock undergoes cracking. The resulting riser reactor product mixture, which comprises a cracked hydrocarbon product and a spent cracking catalyst having a coke content that provides for heat balanced operation of the catalytic cracking process system 10, passes from riser reactor 14 and is introduced into stripper system or separator/stripper 26.

The separator/stripper 26 can be any conventional system that defines a separation zone or stripping zone, or both, and provides means for separating the riser reactor product mixture into a separated cracked hydrocarbon product and a separated spent cracking catalyst.

The separated cracked hydrocarbon product passes from separator/stripper 26 by way of conduit 28 to separation system 30. The separation system 30 can be any system known to those skilled in the art for recovering and separating the cracked hydrocarbon product into the various catalytically cracked products, such as, for example, cracked gas, cracked gasoline, cracked middle distillate and cycle oil. The separation system 30 may include such systems as absorbers and strippers, fractionators, compressors and separators or any combination of known systems for providing recovery and separation of the products that make up the cracked hydrocarbon product.

The separation system 30, thus, defines at least one separation zone and provides means for separating the cracked hydrocarbon product into cracked products. The cracked gas, which can comprise lower olefins, cracked gasoline and cracked middle distillate respectively pass from separation system 30 through conduits 32, 34, and 36.

The separated spent cracking catalyst passes from separator/stripper 26 through conduit 38 and is introduced into catalyst regenerator 18. Catalyst regenerator 18 defines a regeneration zone and provides means for contacting the spent cracking catalyst with an oxygen-containing gas, such as air, under carbon burning conditions to remove carbon from the separated spent cracking catalyst. The oxygen-containing gas is introduced into catalyst regenerator 18 through conduit 40 and the combustion gases pass from catalyst regenerator 18 by way of conduit 42.

The following Example is provided to further illustrate certain aspects of the invention, but, otherwise, it is not to be limiting.

### EXAMPLE

This Example is presented: to show the effect that different rare earth oxide concentrations of a large pore zeolite based cracking catalyst used in the fluidized catalytic cracking of a Fischer-Tropsch derived waxy feedstock has upon coke yield and catalyst-to-oil ratio, and to show the effect of the use and addition of a shape selective zeolite additive, such as ZSM-5, with a rare earth oxide large pore zeolite cracking catalyst in the fluidized catalytic cracking of a Fischer-Tropsch derived waxy feedstock has upon coke yield and catalyst-to-oil ratio.

An experimental pilot system was used to conduct the experiments. The pilot system consisted of six sections including a feed supply system, a catalyst loading and transfer system, a riser reactor, a stripper, a product separation and collecting system, and a regenerator. The riser reactor was an adiabatic riser having an inner diameter of from 11 mm to 19 mm and a length of about 3.2 m. The riser reactor outlet was in fluid communication with the stripper that was operated at the same temperature as the riser reactor outlet flow and in a manner so as to provide essentially 100 percent stripping efficiency. The regenerator was a multi-stage continuous regenerator used for regenerating the spent catalyst. The spent catalyst was fed to the regenerator at a controlled rate and the regenerated catalyst was collected in a vessel. Material balances were obtained during each of the experimental runs at 30-minute intervals. Composite gas samples were analyzed by use of an on-line gas chromatograph and the liquid product samples were collected and analyzed overnight. The coke yield was measured by measuring the catalyst flow and by measuring the delta coke on the catalyst as determined by measuring the coke on the spent and regenerated catalyst samples taken for each run when the unit was operating at steady state.

FIG. 2 presents a summary of data obtained from conducting the cracking experiments in the aforedescribed experimental pilot system. In these cracking experiments, various large pore zeolite based cracking catalysts each having a different rare earth oxide content were used in cracking a Fischer-Tropsch derived waxy feedstock. The plots of FIG. 2 are of the coke yield versus catalyst-to-oil ratio observed for each of the different cracking catalyst compositions. As may be seen from these plots, for a given catalyst-to-oil ratio, the coke yield is greater with the use of a cracking catalyst having a higher rare earth oxide content than with the use of a cracking catalyst having a lower rare earth oxide content. In conventional catalytic cracking of Fischer-Tropsch derived waxy feedstocks the cracking processes are typically coke limited because such feedstocks do not yield enough coke to provide a heat balanced operation.

The data presented in FIG. 2 show the impact that the rare earth oxide content in the cracking catalyst has on the yield of coke when such a cracking catalyst is used in the processing of a Fischer-Tropsch derived waxy feedstock. This demonstrates that the rare earth oxide content of a large pore zeolite cracking catalyst may be adjusted to a high enough level to provide a catalytic cracking process for cracking a Fischer-Tropsch derived waxy feedstock that yields significant amounts of carbon and in some instances carbon yields that are sufficient to offset the low carbon yields associated with cracking the Fischer-Tropsch derived waxy feedstock to provide a heat balanced cracking process without the need for any added heat source.

FIG. 3 presents a summary of data obtained from conducting the cracking experiments in the pilot system described above. In these cracking experiments, different levels of the shape selective zeolite additive, ZSM-5, are charged as a dilution additive with the cracking catalyst in the cracking of a Fischer-Tropsch derived waxy feedstock. The data show that for a given catalyst-to-oil ratio the coke yield decreases with increasing levels of dilution additive. Thus, in the cracking of a Fischer-Tropsch derived waxy feedstock, the less additive that is used, the higher the coke yield. Due to the low coke yields in the cracking of Fischer-Tropsch derived waxy feedstocks it is desirable for the process for catalytic cracking of Fischer-Tropsch derived waxy feedstocks to utilize reduced levels of shape selective zeolite additives such as ZSM-5. It is preferred to minimize the amount of such additives that are introduced into the riser reactor of a catalytic cracking system that is processing a Fischer-Tropsch derived waxy feedstock.

The data presented in FIG. 3 further reveals an unexpected result from the catalytic cracking of a Fischer-Tropsch derived waxy feedstock without the concurrent cracking of other types of hydrocarbon feedstocks. It can be observed from each of the plots of coke yield versus catalyst-to-oil ratio that at low catalyst-to-oil ratios the slope of the curve (i.e., the change in coke yield divided by the change in catalyst-to-oil ratio) is small relative to the slope of the curve at high catalyst-to-oil ratios. This is true regardless of the amount of ZSM-5 dilution additive that is used; however, this phenomenon is only observed when the process conditions include a relatively long gas residence time (e.g., greater than 1.5 seconds) and relatively high riser reactor temperature (e.g., greater than 500 °C (932 °F).

As may further be seen from the plots presented in FIG. 3, for all levels of dilution additive there is a certain level of catalyst-to-oil ratio at which there is a sudden increase in the slope of the relevant curve. For instance, the plot of coke yield versus catalyst-to-oil ratio for the 0% ZSM-5 case exhibits a sudden change in its slope at a catalyst-to-oil ratio of about 9:1. Even for the case when a very high level dilution additive, i.e., 12% ZSM-5 crystal, is used there is observed a sudden increase in the slope of the curve at a catalyst-to-oil ratio of about 13:1.

One significance of the above-described phenomenon is that, in certain embodiments of the process for catalytically cracking Fischer-Tropsch derived waxy feedstocks, even large amounts of dilution additives may be used with the process while still achieving heat balance without the addition of another heat source. This may be done by adjusting the residence time, riser reactor temperature and catalyst-to-oil ratio of the process. This reason the heat balance is achievable is due to the large, sudden change in the incremental increase in coke yield per incremental increase in catalyst-to-oil ratio that occurs at the certain levels of utilized catalyst-to-oil. Without this significant change in coke yield per change in catalyst-to-oil ratio, in the case of the use of high levels of addition of dilution additive, the incremental change in coke yield per incremental change in catalyst-to-oil ratio would not have been large enough so as to allow for a practical increase of the catalyst-to-oil ratio so as to provide a coke yield sufficient for the operation of a heat balanced catalytic cracking unit when running a Fischer-Tropsch derived waxy feed.

## Claims

1. A catalytic cracking process, which comprises:
providing a catalytic cracking system, wherein said catalytic cracking system comprises a riser reactor, a separator and a regenerator each thereof being operatively interconnected;
introducing a cracking catalyst, wherein said cracking catalyst comprises a large pore zeolite having a rare earth component present in said large pore zeolite in an amount in the range of from 0.25 to 5 weight percent (wt. %), based on the weight of said large pore zeolite, into a riser reactor zone defined by said riser reactor;
introducing a hydrocarbon feedstock, wherein said hydrocarbon feedstock comprises a Fischer-Tropsch derived waxy feedstock, into said riser reactor zone operated under suitable catalytic cracking conditions at a gas residence time in the range of from 1 second to 10 seconds, a riser reactor temperature greater than 500 °C, and a catalyst-to-oil ratio greater than 8, wherein said cracking catalyst is contacted and mixed with said hydrocarbon feedstock;
passing from said riser reactor zone a riser reactor product mixture, wherein said riser reactor product mixture comprises a cracked hydrocarbon product and a spent cracking catalyst having coke deposited thereon in an amount or at a concentration sufficient to provide for the heat balance in the operation of said catalytic cracking system of said catalytic cracking process by combustion of said coke within said regenerator which amount or concentration is at least 4 wt.% of the total weight of the catalyst and carbon;
introducing said riser reactor product mixture into a separation zone defined by said separator providing for the separation of said riser reactor product mixture into a separated cracked hydrocarbon product and a separated spent cracking catalyst;
passing said separated spent cracking catalyst to a regeneration zone defined by said regenerator wherein said coke on said separated spent cracking catalyst is combusted so as to release heat energy and to provide a regenerated cracking catalyst; and
utilizing said regenerated cracking catalyst as said cracking catalyst.

2. A catalytic cracking process as recited in claim 1, wherein said hydrocarbon feedstock further comprises less than 10 vol.% of a hydrocarbon source other than said Fischer-Tropsch derived waxy feedstock.

3. A catalytic cracking process as recited in claim 2, further comprising:
introducing into said riser reactor zone as an additive with said cracking catalyst less than 5 %wt of a shape selective zeolite additive, based on total weight of cracking catalyst inventory in the catalytic cracking system and excluding any binder material other than the zeolite crystals.

4. A catalytic cracking process as recited in claim 3, wherein said cracking catalyst further comprises a matrix or binder component and an amount of said large pore zeolite greater than 50 weight percent (wt. %), based on the weight of said cracking catalyst.

5. A catalytic cracking process as recited in claim 4, further comprising: introducing less than 5 vol.% of a hydrocarbon source other than said Fischer-Tropsch derived waxy feedstock into said riser reactor zone.

6. A catalytic cracking process as recited in claim 5, further comprising: introducing no additional hydrocarbon source into said regeneration zone other than hydrocarbon that is contained on said separated spent cracking catalyst for the purpose of generating heat energy.

## Patentansprüche

1. Katalytisches Crackverfahren, umfassend:
Bereitstellen eines katalytischen Cracksystems, wobei das katalytische Cracksystem einen Steigrohrreaktor, einen Separator und einen Regenerator umfasst, wovon jeder operativ verbunden ist;
Einführen eines Crackkatalysators, wobei der Crackkatalysator einen großporigen Zeolith mit einer Seltenerdkomponente umfasst, welche im großporigen Zeolith in einer Menge im Bereich von 0,25 bis 5 Gewichtsprozent (Gew.-%), bezogen auf das Gewicht des großporigen Zeoliths, vorhanden ist, in eine Steigrohrreaktorzone, die durch den Steigrohrreaktor definiert ist;
Einführen eines Kohlenwasserstoff-Rohstoffs, wobei der Kohlenwasserstoff-Rohstoff einen wachsartigen Fischer-Tropsch-Rohstoff umfasst, in die Steigrohrreaktorzone, welche unter geeigneten katalytischen Crackbedingungen bei einer Gasverweildauer im Bereich von einer Sekunde bis zu 10 Sekunden, einer Steigrohrreaktortemperatur von mehr als 500°C und einem Katalysator-zu-Öl-Verhältnis von mehr als 8 betrieben wird, wobei der Crackkatalysator mit dem Kohlenwasserstoff-Rohstoff in Kontakt gebracht und mit diesem vermischt wird;
Leiten einer Steigrohrreaktor-Produktmischung aus der Steigrohrreaktorzone, wobei die Steigrohrreaktor-Produktmischung ein gecracktes Kohlenwasserstoffprodukt und einen verbrauchten Crackkatalysator umfasst, welcher darauf Koks abgelagert hat, in einer Menge oder in einer Konzentration, die ausreichend ist, um die Wärmebilanz im Betrieb des katalytischen Cracksystems des katalytischen Crackverfahrens durch Verbrennen des Kokses innerhalb des Regenerators zu gewährleisten, welche Menge oder Konzentration mindestens 4 Gew.-% des Gesamtgewichts von Katalysator und Kohlenstoff beträgt;
Einführen der Steigrohrreaktor-Produktmischung in eine Trennzone, die durch den Separator definiert wird, um die Trennung der Steigrohrreaktor-Produktmischung in ein abgetrenntes gecracktes Kohlenwasserstoffprodukt und einen abgetrennten verbrauchten Crackkatalysator zu gewährleisten;
Leiten des abgetrennten verbrauchten Crackkatalysators zu einer Regenerationszone, die vom Regenerator definiert wird, wobei der Koks auf dem abgetrennten verbrauchten Crackkatalysator verbrannt wird, um so Wärmeenergie freizusetzen und einen regenerierten Crackkatalysator bereitzustellen; und
Verwenden des regenerierten Crackkatalysators als Crackkatalysator.

2. Katalytisches Crackverfahren nach Anspruch 1, wobei der Kohlenwasserstoff-Rohstoff ferner weniger als 10 Vol.-% einer anderen Kohlenwasserstoffquelle als dem wachsartigen Fischer-Tropsch-Rohstoff umfasst.

3. Katalytisches Crackverfahren nach Anspruch 2, ferner umfassend:
Einführen als ein Additiv mit dem Crackkatalysator in die Steigreaktorzone von weniger als 5 Gew.-% eines formselektiven Zeolith-Additivs, bezogen auf das Gesamtgewicht von Crackkatalysatorinventar im katalytischen Cracksystem und unter Ausschluss von jedwedem anderem Bindemittelmaterial als Zeolithkristallen.

4. Katalytisches Crackverfahren nach Anspruch 3, wobei der Crackkatalysator ferner eine Matrix- oder Bindemittelkomponente, und eine Menge des großporigen Zeoliths von mehr als 50 Gewichtsprozent (Gew.-%), bezogen auf das Gewicht des Crackkatalysators, umfasst.

5. Katalytisches Crackverfahren nach Anspruch 4, ferner umfassend: Einführen von weniger als 5 Vol.-% einer anderen Kohlenwasserstoffquelle als dem wachsartigen Fischer-Tropsch-Rohstoff in die Steigreaktorzone.

6. Katalytisches Crackverfahren nach Anspruch 5, ferner umfassend: Einführen keiner zusätzlichen Kohlenwasserstoffquelle in die Regenerationszone als dem Kohlenwasserstoff, welcher im abgetrennten verbrauchten Crackkatalysator enthalten ist, für die Zwecke der Gewinnung von Wärmeenergie.

## Revendications

1. Procédé de craquage catalytique qui comprend :
la fourniture d'un système de craquage catalytique, dans lequel ledit système de craquage catalytique comprend un réacteur ascendant, un séparateur et un régénérateur, chacun de ceux-ci étant interconnectés fonctionnellement ;
l'introduction d'un catalyseur de craquage, dans lequel ledit catalyseur de craquage comprend une zéolite à larges pores ayant un composant de terres rares présent dans ladite zéolite à larges pores dans une quantité dans la plage de 0,25 à 5 pour cent en poids (% en poids), sur la base du poids de ladite zéolite à larges pores, dans une zone de réacteur ascendant définie par ledit réacteur ascendant ;
l'introduction d'une charge d'alimentation en hydrocarbures, dans lequel ladite charge d'alimentation en hydrocarbures comprend une charge d'alimentation cireuse dérivée de Fischer-Tropsch, dans ladite zone de réacteur ascendant exploitée dans des conditions de craquage catalytique adéquates avec un temps de séjour des gaz dans la plage de 1 seconde à 10 secondes, une température de réacteur ascendant supérieure à 500°C et un rapport catalyseur/huile supérieur à 8, dans lequel ledit catalyseur de craquage est mis en contact et mélangé avec ladite charge d'alimentation en hydrocarbures ;
le passage à partir de ladite zone de réacteur ascendant d'un mélange de produits de réacteur ascendant, dans lequel ledit mélange de produits de réacteur ascendant comprend un produit d'hydrocarbures craqués et un catalyseur de craquage usé ayant du coke déposé dessus dans une quantité ou avec une concentration suffisante pour fournir l'équilibre thermique dans le fonctionnement dudit système de craquage catalytique dudit procédé de craquage catalytique par combustion dudit coke à l'intérieur dudit régénérateur dont la quantité ou concentration est d'au moins 4% en poids du poids total du catalyseur et du carbone ;
l'introduction dudit mélange de produits de réacteur ascendant dans une zone de séparation définie par ledit séparateur fournissant la séparation dudit mélange de produits de réacteur ascendant en un produit d'hydrocarbures craqués séparé et un catalyseur de craquage usé séparé ;
le passage dudit catalyseur de craquage usé séparé à une zone de régénération définie par ledit régénérateur dans lequel ledit coke sur ledit catalyseur de craquage usé séparé est brûlé de manière à dégager de l'énergie thermique et pour fournir un catalyseur de craquage régénéré ; et
l'utilisation dudit catalyseur de craquage régénéré comme ledit catalyseur de craquage.

2. Procédé de craquage catalytique selon la revendication 1, dans lequel ladite charge d'alimentation en hydrocarbures comprend en outre moins de 10% en volume d'une source d'hydrocarbures autre que ladite charge d'alimentation cireuse dérivée de Fischer-Tropsch.

3. Procédé de craquage catalytique selon la revendication 2, comprenant en outré :
l'introduction dans ladite zone de réacteur ascendant comme un additif avec ledit catalyseur de craquage de moins de 5% en poids d'un additif de zéolite sélective de forme, sur la base du poids total du stock de catalyseur de craquage dans le système de craquage catalytique et en excluant tout matériau liant autre que les cristaux de zéolite.

4. Procédé de craquage catalytique selon la revendication 3, dans lequel ledit catalyseur de craquage comprend en outre un composant de matrice ou liant et une quantité de ladite zéolite à larges pores supérieure à 50 pour cent en poids (% en poids), sur la base du poids dudit catalyseur de craquage.

5. Procédé de craquage catalytique selon la revendication 4, comprenant en outre : l'introduction de moins de 5% en volume d'une source d'hydrocarbures autre que ladite charge d'alimentation cireuse dérivée de Fischer-Tropsch dans ladite zone de réacteur ascendant.

6. Procédé de craquage catalytique selon la revendication 5, comprenant en outre : l'introduction d'aucune source d'hydrocarbure additionnelle dans ladite zone de régénération autre que l'hydrocarbure qui est contenu sur ledit catalyseur de craquage usé séparé à des fins de génération d'énergie thermique.
